# EUROPÄISCHE PATENTANMELDUNG

(11) **EP 1 561 985 A1**
(43) Veröffentlichungstag der Anmeldung: **10.08.2005**
(21) Anmeldenummer: 04405695.0
(22) Anmeldetag: 11.11.2004
(51) Int. Cl.: F16L 27/08, F16L 39/04, F16L 47/18

(54) **Einrichtung zur berührungslosen Übertragung von Gasen, Vakuum oder Flüssigkeiten zwischen festen und rotierenden Maschinenteilen**

(30) Priorität: 06.02.2004 CH 1662004
(71) Anmelder: Borel et Broillet Sàrl, 2017 Boudry (CH)
(72) Erfinder: Borel, René, 2017 Boudry (CH)

(57) **Zusammenfassung**

Im Innern des Rohres (1) fliesst das abzudichtende Medium. Zwischen dem Rohr (1) und dem Rohr (2) besteht ein feiner Luftspalt (3), so dass sich die Rohre (1) und (2) gegeneinander drehen können. Das Rohr (1) ist genau konzentrisch ins Gehäuse (4) eingepasst. Das Rohr (2) ist im Gehäuse (4) mittels einer Lagerung (5) drehbar geführt. Ein Flanschstück (6) erlaubt eine Befestigung des Rohres (2) an einem äusseren Maschinenteil.

## Beschreibung

Einrichtung zur berührungslosen Übertragung von Gasen, Vakuum oder Flüssigkeiten zwischen festen und rotierenden Maschinenteilen.

Die Einrichtung dient zur Übertragung von gasförmigen oder flüssigen Medien von einem festen auf einen sich drehenden Maschinenteil und findet Verwendung im Apparate- und Maschinenbau.

In den bisherigen Drehübertragern werden Dichtungsringe oder sich gegenseitig berührende Dichtscheiben verwendet. Dadurch entsteht bei höheren Drehzahlen Reibwärme und Abrieb, was die Lebensdauer stark beeinträchtigt.

Die Erfindung nutzt die Tatsache, dass zwei ineinander gefügte Rohre mit einem sehr kleinen Luftspalt zwischen dem innem und dem äussem Rohr genügend dicht sind, wobei sich ein Rohr in Bezug auf das andere drehen lässt. Dadurch, dass sich bei konzentrischer Lagerung die Wandungen nicht berühren entsteht keinerlei Reibung. Es ist somit eine hohe Drehzahl möglich. Ein kleiner Leckverlust wird in Kauf genommen. Es lässt sich damit ein Medium durch das innere Rohr leiten ohne dass es ausserhalb des Rohrsystemes gelangt.

Zwischen der Aussenwandung des Rohres (1)und der Innenwandung des Rohres (2) besteht ein sehr feiner Luftspalt (3).Dieser soll so beschaffen sein, dass sich die Rohre (1) und (2) leicht gegeneinander drehen lassen. Trotzdem soll noch ein grosser Widerstand für den Durchlass eines gasförmigen oder flüssigen Mediums bestehen. Dies kann man mit Feindrehen, Schleifen, Honen, Polieren oder chemischen Überzügen erreichen. Das Rohr (1) wird genau konzentrisch in das Gehäuse (4) eingepresst. Das Gehäuse (4) enthält zwei oder mehrere Kugellager (5) in denen das Rohr (2) eingeführt ist, so dass sich das Rohr (2) im Gehäuse (4) drehen kann. Ein aufmontiertes Flanschstück (6) gestattet die Befestigung des Ganzen an einen beliebigen Maschinenteil und kann mit Befestigungslöchern versehen sein.

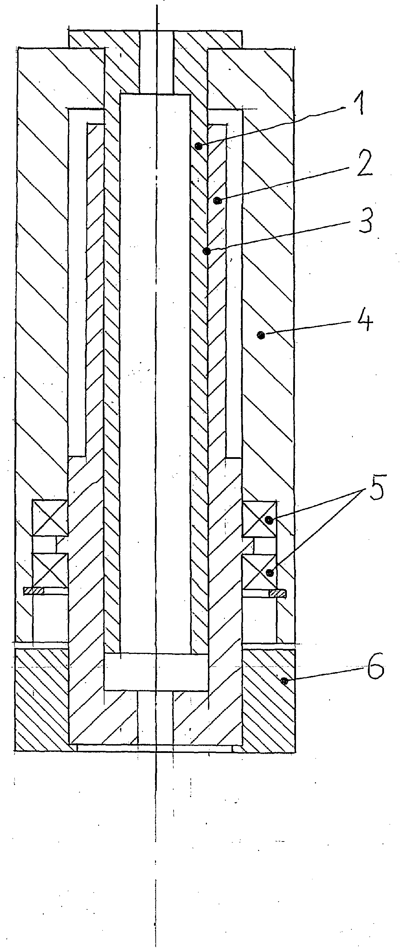

## Patentansprüche

1. Einrichtung aus Metall zum Durchlass von gasförmigen oder flüssigen Medien von einem festen auf einen sich drehenden Maschinenteil, **dadurch gekennzeichnet, dass** zwei ineinandergefügte Rohre darin vorgesehen sind welche sich gegeneinander drehen lassen.

2. Einrichtung gemäss Anspruch 1, **dadurch gekennzeichnet, dass** mittels mehreren konzentrischen Rohren gleichzeitig mehrere verschiedene Medien durchgeführt werden können.

3. Einrichtung gemäss der Ansprüche 1 und 2, **dadurch gekennzeichnet, dass** die Teile aus Kunststoff gefertigt sind.
